Europäisches Patentamt

European Patent Office

Office européen des brevets

(19)

Publication number: **0 285 901**
**A1**

## EUROPEAN PATENT APPLICATION

(21) Application number: **88104562.9**

(22) Date of filing: **22.03.88**

(51) Int. Cl.⁴ **C08G 61/08**

(30) Priority: **23.03.87 JP 65669/87**
**23.03.87 JP 65670/87**

(43) Date of publication of application:
**12.10.88 Bulletin 88/41**

(84) Designated Contracting States:
**BE DE FR GB IT NL SE**

(71) Applicant: **NIPPON ZEON CO., LTD.**
**6-1, 2-chome**
**Marunouchi Chiyoda-ku, Tokyo(JP)**

(72) Inventor: **Yamato, Motoyuki**
**Ooiso Koma Haitsu 2-232 2-21, Koma**
**Ooiso-cho Naka-gun Kanagawa(JP)**
Inventor: **Okumura, Kin-ichi**
**Aza Niihama Shionasu Kojima**
**Kurashiki-shi Okayama(JP)**

(74) Representative: **Kraus, Walter, Dr. et al**
**Patentanwälte Kraus, Weisert & Partner**
**Thomas-Wimmer-Ring 15**
**D-8000 München 22(DE)**

(54) **Process for preparation of thermosetting resin.**

(57) A thermosetting resin of dicyclopentadiene or a mixture thereof is prepared by bulk-polymerizing a waxy or oily product (A) obtained by heat-treating a dicyclopentadiene or a mixture of said product (A) and a norbornene monomer (B), in a mold in the presence of a metathesis catalyst system. The bulk polymerization may be effected further in the presence of an elastomer.

EP 0 285 901 A1

# PROCESS FOR PREPARATION OF THERMOSETTING RESIN

## BACKGROUND OF THE INVENTION

### (1) Field of the Invention

The present invention relates to a process for preparing a thermosetting resin by bulk-polymerization of a norbornene monomer. More particularly, it relates to a process for the preparation of a thermosetting resin having a high heat distortion temperature and an improved flexural modulus of elasticity.

### (2) Description of the Related Art

The process for ring-opening polymerization of a norbornene monomer such as dicyclopentadiene or methyl-tetracyclododecene in a mold is known.

For example, Japanese Unexamined Patent Publication No. 58-129,013 ( = U.S. Patent No. 4,400,340) discloses a process for preparing a thermosetting dicyclopentadiene (DCP) homopolymer by the reaction injection molding method (RIM method) using a metathesis catalyst system. According to a preferred embodiment of this process, the homopolymer is prepared by combining two solutions, that is, one solution consisting of a mixture of a catalyst component of the metathesis catalyst system such as a tungsten halide or a tungsten oxyhalide and a DCP monomer and another solution consisting of an activator of the metathesis catalyst system such as an alkylaluminum halide and a DCP monomer, in a reaction injection molding (RIM) machine and casting the mixture into a mold.

Japanese Unexamined Patent Publication No. 59-51,911 ( = U.S. Patent No. 4,426,502) discloses a process for bulk ring-opening polymerization of a cyclic olefin containing a norbornene ring according to the RIM method using a metathesis catalyst system. Use of an alkoxyalkylaluminum halide or aryloxyalkylaluminum halide as a cocatalyst (i.e., activator) for prolonging the pot life in this bulk polymerization process is proposed.

It is known that the above-mentioned polymerization of a cyclic olefin such as DCP is carried out in the presence of an elastomer as an impact strength modifier. For example, it is taught in Japanese Unexamined Patent Publication No. 58-129,013 that if an elastomer is added to one or both of the two solutions, the impact strength can be increased 5 to 10 times, though the flexural modulus of elasticity is slightly reduced.

Ring-opened polymers prepared according to these known processes have relatively satisfactory physical properties required for engineering plastics, such as impact resistance, high modulus of elasticity and heat resistance, but they are still insufficient in view of severe requirements in these days. For example, the glass transition temperatures of the DCP homopolymers obtained according to these processes are about 90°C, and therefore, these homopolymers are somewhat insufficient as materials to be used in the field where a high heat resistance is required.

As the polycyclic characteristics of the norbornene monomer to be used is increased, that is, as the amount of cyclic structural units in the monomer is increased, the heat distortion temperature of the obtained polymer is elevated. However, a polycyclic monomer having a high purity is not easily available, and since the polycyclic monomer is a solid in many cases, the operation of casting the monomer into a mold is difficult in the RIM method.

Japanese Unexamined Patent Publication No. 61-179,214 ( = U.S. Patent No. 4,584,425) discloses, as means for elevating the glass transition temperature (Tg) of a polymer product and improving the heat distortion temperature characteristics thereof, a process in which a norbornene monomer such as DCP is copolymerized with a comonomer having at least two reactive bonds and being capable of increasing the number of crosslinkages by cleavage during the polymerization, such as trimethylolpropane tris-(5-norbornene-2-carboxylate). In this process, however, a special comonomer which is not easily available must be used, and this process is disadvantageous from the economical viewpoint.

## SUMMARY OF THE INVENTION

We made investigations with a view of eliminating the foregoing defects and as the result, it was found that if a waxy or oily product obtained by heat-treating a dicyclopentadiene or a mixture of this product and a norbornene monomer is bulk-polymerized in a mold having a predetermined shape in the presence of a metathesis catalyst system, a thermosetting resin having a high transition point and an improved flexural modulus of elasticity is obtained. If the bulk-polymerization is carried out further in the presence of an elastomer, the impact strength is remarkably increased. We have now completed the present invention based on this finding.

More specifically, the gist of the present invention resides in a process for the preparation of a thermosetting resin, which comprises bulk-polymerizing a waxy or oily product (A) obtained by heat-treating a dicyclopentadiene or a mixture of said prccut (A) and a norbornene monomer (B), in a mold in the presence of a metathesis catalyst system and an optical elastomer.

## DESCRIPTION OF THE PREFERRED EMBODIMENTS

The essential elements of the present invention will now be described in detail.

## Waxy or Oily Product (A)

The waxy or oily product (A) obtained by the heat treatment of a dicyclopentadiene, which is used in the present invention, is formed by the heat treatment of dicyclopentadiene (DCP) or an alkyl substitution product thereof, such as a methyl or ethyl substitution product. As the heat treatment means, there can be mentioned, for example, a method in which a dicyclopentadiene is heated at 120 to 250°C, preferably 150 to 220°C, for 0.5 to 20 hours, preferably 1 to 10 hours, in an atmosphere of an inert gas such as nitrogen gas. The heat treatment reaction can be conducted batchwise or in a continuous manner. A solvent inert to the reaction, such as benzene, toluene or xylene, may be made present at the treatment. In this case, however, the operation of removing the solvent after the treatment should be performed. Therefore, preferably the heat treatment is carried out without using a solvent, if permissible.

Preferably the heat treatment is carried out in the presence of an antioxidant. Phenolic antioxidants are preferred as the antioxidant. For example, there can be mentioned 4,4-dihydroxydiphenyl, hydroquinone monobenzyl ether, 2,4-dimethyl-6-butylphenol, 2,6-di-t-butylphenol, 2,6-diamylhydroquinone, 2,6-di-t-butyl-p-cresol, 4-hydroxymethyl-2,6-di-t-butylphenol, 4,4'-methylene-bis(6-t-butyl-o-cresol), butylated hydroxyanisole, phenol condensates, butylenated phenols, dialkylphenol sulfides, high-molecular-weight polyhydric phenols and bisphenols. Moreover, quinone antioxidants such as t-butylcatechol, hydroquinone, resorcinol and pyrogallol can be used. The antioxidant is used in an amount of 10 to 10,000 ppm, preferably 100 to 1,000 ppm, based on the DCP monomer.

The obtained product can be directly used as the starting material for the production of the thermosetting resin of the present invention. The unreacted DCP monomer or low-boiling-point impurity can be removed, if necessary.

If the purity of the starting DCP monomer is at least 90% by weight, preferably at least 95% by weight, the DCP monomer need not particularly be refined in advance, and this heat treatment product gives a good thermosetting resin. In the conventional RIM method, since impurities inhibit the polymerization, generally commercially available DCP having a purity of 96 to 97% by weight must be further refined to remove low-boiling-point fractions (see Japanese Unexamined Patent Publication No. 58-129,013 = U.S. Patent No. 4,400,340). Accordingly, the preparation process of the present invention is advantageous in that since the DCP monomer need not be highly refined, the monomer cost can be controlled to a low level.

The product obtained by the heat treatment of the DCP monomer is a waxy or oily product.

The waxy product has a solidification point not higher than 100°C, preferably not higher than 60°C. The oily product has s viscosity not higher than 200 cps, preferably not higher than 100 cps. The product contains the unreacted DCP monomer and the heat reaction product of the DCP monomer. In the present invention, a waxy or oily product containing at least 5% by weight, especially at least 10% by weight, of the heat reaction product of the DCP monomer is preferred.

Norbornene Monomer (B)

As the norbornene monomer to be bulk-polymerized according to the process of the present invention. there can be mentioned substituted and unsubstituted norbornene. dicyclopentadiene, dihydrodicyclopentadiene. tricyclopentadiene, tetracyclopentadiene and tetracyclododecene. As specific examples, there can be mentioned dicyclopentadiene. methyldicyclopentadiene, tetracyclododecene, methyltetracyclododecene, 2-norbornene. 5-methyl-2-norbornene. 5,6-dimethyl-2-norbornene. 5-ethyl-2-norbornene. 5-butyl-2-norbornene. 5-hexyl-2-norbornene. 5-octyl-2-norbornene and 5-dodecyl-2-norbornene. Of these, norbornene monomers having a tricyclic or tetracyclic structure such as, for example, dicyclopentadienes and methyltetracyclododecene are preferred because of their availability, reactivity, and thermal resistance. Dicyclopentadienes are most preferred because a crosslinked polymer is obtained in an industrially advantageous way.

Mixture of Product (A) and Norbornene Monomer (B)

The waxy or oily product (A) obtained by the heat treatment of the DCP monomer can be used singly. or it can be used in the form of a mixture with the norbornene monomer (B) according to need. The mixing ratio between the product (A) and the norbornene monomer (B) can be appropriately selected according to the intended object, but in general, the mixing ratio is such that the amount of the product (A) is 100 to 10% by weight. preferably 100 to 20% by weight, and the amount of the norbornene monomer (B) is 0 to 90% by weight. preferably 0 to 80% by weight. Preferably the heat reaction product of the DCP monomer contained in the product (A) is present in an amount of at least 5% by weight. especially 10% by weight, in the mixture. As the ratio of the product (A) is reduced. the glass transition temperature and flexural modulus of elasticity are reduced.

The properties of the mixture of both the components are not particularly critical, but a mixture which is liquid at 30°C. preferably at 10°C, is advantageous in the operation of casting the mixture in a mold. The viscosity of the liquid at 30°C is generally not higher than 500 cps. preferably not higher than 200 cps. especially preferably not higher than 100 cps.

The solidification point can be lowered by adding a polymeric modifier such as an elastomer or DCP resin or a filler to the product (A) or the mixture thereof. In this case, it is sufficient if the mixture containing the polymeric modifier or the filler is liquid at the above-mentioned temperature.

Mixing of the product (A) with the norbornene monomer (B) can be easily accomplished by using a mixer such as a power mixer, a static mixer or a collision mixer, but, where the product (A) is waxy, in view of the efficiency, there is preferably adopted a method in which the product (A) is mixed with the norbornene monomer (B) in the molten state just after completion of the heat treatment.

Elastomer

In the process of the present invention, it is preferable for the purpose of enhancing mainly the impact resistance to conduct the bulk polymerization in the copresence of an elastomer. As the elastomer, there can be mentioned, for example, a natural rubber, polybutadiene, polyisoprene, a styrene/butadiene copolymer (SBR), a styrene/butadiene/styrene block copolymer (SBS), a styrene/isoprene/styrene copolymer (SIS), an ethylene/propylene/diene terpolymer (EPDM), an ethylene/vinyl acetate copolymer (EVA), and hydrogenation products thereof.

In general, the elastomer is used in the state dissolved in the reaction solution containing the monomer (i.e., the waxy or oily product (A) or the mixture of the waxy or oily product (A) and the norbornene monomer (B)).

Where the viscosity of the monomer-containing reaction solution is low, the viscosity of the reaction solution can be adjusted to an appropriate level by incorporation of the elastomer. If the elastomer is added. the solidification point of the monomer-containing reaction solution can be reduced when the waxy product is used as the product (A).

The amount of the elastomer added can be appropriately decided. In general, the elastomer is incorporated in an amount of 0.5 to 20 parts by weight. preferably 1 to 15 parts by weight, per 100 parts by weight of the norbornene monomer. If the amount of the elastomer is too small, the effect of improving the impact resistance is insufficient, and if the amount of the elastomer is too large, the viscosity of the reaction

4

solution is too high and the operation adaptability to molding is degraded, and the heat distortion temperature or flexural modulus of elasticity is reduced.

Mixing of the monomer and elastomer can be easily accomplished by various mixing machines as described above.

## Metathesis Catalyst System

The kind of the catalyst used in the present invention is not particularly critical, and any of known metathesis catalyst systems for bulk polymerization of norbornene monomers [for example, metathesis catalyst systems disclosed in Japanese Unexamined Patent Publications No. 58-127,728 ( = U.S. Patent No. 4,380,617), No. 58-129,013 (U.S. Patent No. 4,400,340), No. 59-51,911 (U.S. Patent No. 4,426,502), No. 60-79,035 (U.S. Patent No. 4,481,344), No. 60-186,511 ( = EP 142,861) and No. 61-126,115 ( = EP 181,642)] can be used without any limitation.

As the metathesis catalyst, there can be mentioned, for example, halides, oxyhalides, oxides and organic ammonium salts of tungsten, molybdenum and tantalum. As preferred examples, there can be mentioned tungsten compounds such as tungsten hexachloride, tungsten oxytetrachloride, tungsten oxide, tridecylammonium tungstate, methyltricaprylammonium tungstate, tri(tridecyl)ammonium tungstate and trioctylammonium tungstate; molybdenum compounds such as molybdenum pentachloride, molybdenum oxytrichloride, tridodecylammonium molybdate, methyltricaprylammonium molybdate, tri(tridecyl)ammonium molybdate and trioctylammonium molybdate; and tantalum compounds such as tantalum pentachloride. A preferable catalyst is soluble in the oily product or norbornene monomer used for the reaction. Use of an organic ammonium salt is recommended from this viewpoint. Where the catalyst used is a halide, the catalyst can be solubilized by treating it with an alcoholic or phenolic compound in advance. Lewis bases such as benzonitrile and tetrahydrofuran and chelating agents such as acetylacetone and alkyl acetoacetates can be used for preventing premature polymerization.

As the activator (i.e., cocatalyst), there can be mentioned, for example, alkylaluminum halides, alkoxy alkylaluminum halides, aryloxyalkylaluminum halides and organic tin compounds. As preferred examples, there can be mentioned ethylaluminum dichloride, diethylaluminum monochloride, ethylaluminum sesquichloride, diethylaluminum iodide, ethylaluminum diiodide, propylaluminum dichloride, propylaluminum diiodide, isobutylaluminum dichloride, ethylaluminum dibromide, methylaluminum sesquichloride, methylaluminum sesquibromide, tetrabutyltin and an alkylaluminum halide/alcohol prereaction product.

Of these activators, alkoxyalkylaluminum halides and aryloxyalkylaluminum halides are operationally advantageous because an appropriate pot life is obtained even when the catalyst component is incorporated [see, for example Japanese Unexamined Patent Publication No. 59-51,911 ( = U.S. Patent No. 4,426,502)]. An alkylaluminum halide has problem in that when the catalyst is incorporated, polymerization is started at once. In this case, the polymerization can be retarded by using a controlling agent such as an ether, an ester, a ketones, a nitrile or an alcohol in combination with the activator (see, for example, Japanese Unexamined Patent Publications No. 58-129,013 (U.S. Patent No. 4,400,340) and No. 61-120,814). If the controlling agent is not used, the apparatus and operation should be arranged so that even an activator giving a short pot life can be used. A halogenated hydrocarbon such as chloroform, carbon tetrachloride or hexachlorocyclopentadiene can be used in combination with the catalyst and activator [see, for example, Japanese Unexamined Patent Publication No. 60-79,035 = U.S. Patent No. 4,481,344)].

The metathesis catalyst is used in an amount of about 0.01 to about 50 millimoles, preferably 0.1 to 10 millimoles, per mole of the whole monomers [the sum of the product (A) and the norbornene monomer (B)]. The activator (cocatalyst) is used at a molar ratio of 0.1 to 200, preferably 2 to 10, to the catalyst component.

Preferably both of the metathesis catalyst and activator are used in the state dissolved in the monomers. The catalyst and activator can be used in the state suspended or dissolved in a small amount of a solvent, if the properties of the product are not degraded to any significant degree.

## Polymerization Conditions

In the present invention, a thermosetting resin is prepared according to the polymerization process in which the product (A) or the mixture of the product (A) and the norbornene monomer (B) is introduced into a mold having a predetermined shape, and bulk polymerization is carried out in the mold in the presence of the metathesis catalyst system. It is sufficient if the polymerization is substantially bulk polymerization, and a small amount of an inert solvent may be present.

According to a preferred embodiment of the process for the preparation of a thermosetting resin, the product (A) or the mixture of the product (A) and the norbornene monomer (B) is divided in two liquids, the liquids are charged in different vessels, the metathesis catalyst is added to one liquid and the activator is added to the other liquid to prepare two stable reaction solutions, the optional elastomer is added to one or both of the two reaction solutions. Then the two solutions are mixed together, and the mixture is injected or cast in a mold maintained at a high temperature, where bulk ring-opening polymerization is advanced to obtain a thermosetting resin. The viscosity of the reaction solutions is generally not higher than 50,000 cps, preferably not higher than 20,000, especially preferably not higher than 10,000 cps.

In the present invention, the known impinging mixing apparatus heretofore used as the RIM apparatus can be used for mixing the two reaction solutions. In this case, the vessel containing one of the two reaction solutions and the vessel containing the other solution act as different flow supply sources. The two flows are instantaneously mixed at the mixing head of the RIM machine, and the mixture is injected in the mold maintained at a high temperature where bulk polymerization is instantaneously effected to obtain a thermosetting resin.

The impinging mixing apparatus can be used in the above-mentioned manner, but the mixing means that can be used in the present invention is not limited to this mixing apparatus. Where the pot life at room temperature is as long as one hour, there may be adopted a method in which after completion of mixing of the two reaction solutions in a mixer, the mixture is injected or cast in a preliminarily heated mold once or several times [see, for example, Japanese Unexamined Patent Publication No. 59-51,911 (= U.S. Patent No. 4,426,502)]. This method is advantageous in that the size of the mixing apparatus can be reduced as compared with the size of the impinging mixing apparatus and the operation can be performed under a lower pressure.

The process of the present invention is not limited to the embodiment in which two reaction solutions are used. As is readily understood by persons with ordinary skill in the art, there can be adopted various modifications, for example, a method in which a reaction liquid and an additive are charged in a third vessel and the mixture is used as a third flow.

The mold temperature is usually at least 50°C, preferably 60 to 200°C, especially preferably 90 to 130°C. The mold pressure is ordinarily in the range of from 0.1 to 100 $kg/cm^2$.

The polymerization time can be appropriately selected, but in general, the polymerization time is shorter than 20 minutes, preferably not longer than 5 minutes. However, a longer time may be adopted.

The components to be subjected to the polymerization must be stored in an atmosphere of an inert gas such as nitrogen gas and the operation should be performed in this inert gas atmosphere. The mold may be sealed with an inert gas, but this sealing is not indispensable.

Properties of Thermosetting Resin

The bulk polymerization product obtained according to the process of the present invention is a thermosetting resin which becomes a hard solid on cooling. The glass transition point of the resin is at least 95°C, preferably at least 100°C, and the resin has a high heat distortion temperature and an improved flexural modulus of elasticity. When the resin is prepared by using an elastomer, the resin exhibits an improved impact strength.

Optional Components

The characteristics of the thermosetting resin of the present invention can be improved by incorporating various additives such as a filler, an antioxidant, a pigment, a colorant and a polymeric modifier.

The additives are added to one or both of the reaction solutions or charged in the cavity of the mold.

As the filler, there can be used inorganic fillers such as glass, carbon black, talc, calcium carbonate and mica.

In addition to the elastomer, a polymeric modifier such as a heat-polymerized DCP resin may be added. If the heat-polymerized DCP resin is incorporated, the flexural modulus of elasticity can be further improved. The polymeric modifier is dissolved in the reaction solution and used in this state.

## Examples

The present invention will now be described in detail with reference to the following examples and referential examples that by no means limit the scope of the invention. All of "parts" and "%" in the examples are by weight.

## Referential Example 1

An autoclave having a capacity of 1 liter was charged with 700 g of dicyclopentadiene (DCP) containing 500 ppm of 2,6-di-tertiary-butylphenol (BHT) and having a purity of 98.5%, and the inner atmosphere was sufficiently substituted with nitrogen. The temperature was elevated to 170°C and reaction was carried out for 4 hours to obtain an oily product. The viscosity of the oily product was 10 cps as measured at 30°C. The oily product comprised 75% of unreacted DCP and 25% of a trimer and higher oligomers of cyclopentadiene (CP).

## Referential Example 2

A waxy product was obtained in the same manner as described in Referential Example 1 except that the reaction was carried out at 180°C for 4 hours. The waxy product had a solidification point of 50°C (the viscosity at 55°C was 30 cps). The waxy product comprised 40% of unreacted DCP and 60% of a trimer and higher oligomers of CP.

DCP was further added to the so-obtained waxy product at various mixing ratios. The solidification points observed are shown in Table 1.

### Table 1

| Run No. | DCP/Wax mixing ratio | Solidification point (°C) |
|---|---|---|
| 1 | 0/100 | 50 |
| 2 | 30/70 | 32 |
| 3 | 50/50 | 6 |
| 4 | 70/30 | -10> |
| 5 | 90/10 | 25 |
| 6 | 100/0 | 35 |

## Referential Example 3

The heat treatment was carried out in the same manner as described in Referential Example 1 except that DCP (CP Dimer supplied by Nippon Geon Co.) containing 500 ppm of BHT and having a purity of 94.5% was used, whereby an oily product having a viscosity of 10 cps as measured at 30°C was obtained. The oily product comprised 76% of unreacted DCP and 24% of a trimer and higher oligomers of CP.

## Example 1

The oily product was charged in two vessels. In one vessel, diethylaluminum chloride (DEAC) and n-propanol were added to the oily product at concentrations of 33 millimoles and 4.95 millimoles, respectively, per liter of the oily product (liquid A).

In the other vessel, tri(tridecyl)ammonium molybdate was added at a concentration of 4 millimoles per liter of the oily product (liquid B).

Both reaction liquids A and B were mixed at a ratio of 1·1. The obtained mixture retained a stable state with no change of the viscosity at 35°C for 1 hour (the period of time for which a stable state is retained without any change of the viscosity is hereinafter referred to as "pot life").

Both reaction liquids were promptly cast in a mold, which had a cavity volume of 200 mm × 200 mm × 2 mm and was heated at 90°C, by using a gear pump and a power mixer. The time required for casting was about 15 seconds. When 30 seconds had passed from the point of completion of casting, heat was violently generated to start reaction. The reaction was conducted in the mold for 3 minutes as a whole. The series of these operations were conducted in an atmosphere of nitrogen gas.

The glass transition point of the so-obtained molded article was found to be 110°C, and the flexural modulus of elasticity was 21,000 kg/cm$^2$.

## Example 2

By using mixtures having compositions shown in Table 1 in Referential Example 2, molded articles were obtained in the same manner as described in Example 1 (where only the wax was used, the mixture was heated at 55°C and cast). Data of the pot life, glass transition point and flexural modulus of elasticity of each of the molded articles are shown in Table 2.

### Table 2

| | Examples of Present Invention | | | | | Comparative Examples |
|---|---|---|---|---|---|---|
| DCP/wax mixing ratio | 0/100* | 30/70 | 50/50 | 70/30 | 90/10 | 100/0 |
| Pot life (35°C) | 20 minutes** | Longer than 1 hour | Longer than 1 hour | Longer than 1 hour | Longer than 1 hour | Longer than 1 hour |
| Tg (°C) | 140 | 126 | 117 | 107 | 97 | 85 |
| Flexural modulus of elasticity (kg/cm$^2$) | 28,500 | 27,000 | 24,000 | 26,500 | 20,500 | 19,000 |

Note
*: the operation was conducted at 55°C
**: pot life at 50°C

8

## Example 3

A molded article was prepared in the same manner as described in Example 1 except that a mixture comprising 50 parts of the waxy product obtained in Referential Example 2, 30 parts of DCP and 20 parts of methyltetracyclododecene was used.

The solidification point of the mixture was lower than 0°C, and Tg of the obtained molded article was 130°C and the flexural modulus of elasticity was 27,500 kg/cm².

## Example 4

The oily product obtained in Referential Example 1 was charged in two vessels. In one vessel, DEAC and n-butyl ether were added in amounts of 48 millimoles and 98 millimoles, respectively, per liter of the oily product, and in the other vessel, a mixture of tungsten hexachloride/p-t-butyl phenol/benzonitrile ( = 1 1 1.4 by mole) was added in amount such that the concentration of tungsten hexachloride was 7 millimoles per liter of the oily product. The so-prepared two reaction liquids were mixed at a mixing ratio of 1 1 and injection-molded under the same mold and temperature conditions as adopted in Example 1 by using the RIM machine of the impinging mixing type.

Tg of the so-obtained molded article was 108°C, and the pot life of the mixture at 35°C was about 15 seconds.

## Example 5

A molded article was prepared in the same manner as described in Example 1 except that the oily product obtained in Referential Example 3 was used. Tg of the obtained molded article was 105°C, and the flexural elastic modulus was 21,000 kg/cm².

## Example 6

The oily product obtained in Referential Example 1 was charged in two vessels. In one vessel, diethylaluminum chloride (DEAC) and n-propanol were added to the oily product at concentrations of 33 millimoles and 4.95 millimoles, respectively, per liter of the oily product.

In the other vessel, tri(tridecyl)ammonium molybdate was added at a concentration of 4 millimoles per liter of the oily product.

A styrene/isoprene/styrene block copolymer (Kraton 1170 supplied by Shell Chemicals, hereinafter referred to as "SIS") was used as the elastomer at various mixing ratios. The block copolymer was roughly divided into two portions and incorporated and dissolved in both the reaction liquids.

Both reaction liquids were mixed at a ratio of 1/1. The obtained mixture retained a stable state with no change of the viscosity at 35°C for one hour.

Both reaction liquids were promptly cast in a mold, which had a cavity volume of 200 mm × 200 mm × 2 mm and was heated at 90°C, by using a gear pump and a power mixer. The time required for casting was about 15 seconds. When 30 seconds had passed from the point of completion of casting, heat was violently generated to start reaction. The reaction was conducted in the mold for 3 minutes as a whole. The series of these operations were conducted in an atmosphere of nitrogen gas.

The physical properties of thermosetting resin compositions obtained at various mixing ratios of the elastomer are shown in Table 3.

Table 3

| | Comparative Examples | Examples of Present Invention | | |
|---|---|---|---|---|
| SIS/monomer mixing ratio | 0/100 | 5/100 | 10/100 | 15/100 |
| Pot life (hour) | Longer than 1 hour | Longer than 1 hour | Longer than 1 hour | Longer than 1 hour |
| Tg (°C). | 110 | 108 | 110 | 107 |
| Flexural modulus of elasticity (kg/cm$^2$) | 21,000 | 20,500 | 19,500 | 18,500 |
| Izod impact strength (notched) (kg·cm/cm) | 4.5 | 35 | 40 | 40 |

Example 7

A molded article (thermosetting resin composition) was prepared in the same manner as described in Example 6 by using the mixture shown in Table 1 of Referential Example 2 as the monomer and incorporating SIS used in Example 6 in an amount of 5 parts per 100 parts of the monomer (where the monomer was composed solely of the waxy product, the reaction mixture was heated at 55°C and cast). The pot life, glass transition temperature, flexural modulus of elasticity and impact resistance of the obtained molded article are shown in Table 4.

## Table 4

| | Examples of Present Invention | | | | | Comparative Examples |
|---|---|---|---|---|---|---|
| DCP/wax mixing ratio | 0/100 | 30/70 | 50/50 | 70/30 | 90/10 | 100/0 |
| Pot life (35°C) | 20 minutes* | Longer than 1 hour | Longer than 1 hour | Longer than 1 hour | Longer than 1 hour | Longer than 1 hour |
| Tg (°C) | 140 | 128 | 115 | 109 | 97 | 83 |
| Flexural modulus of elasticity $(kg/cm^2)$ | 27,500 | 26,000 | 23,500 | 22,000 | 20,000 | 17,500 |
| Izod impact strength (notched) $(kg \cdot cm/cm)$ | 25 | 30 | 30 | 35 | 40 | 40 |

Note
*: pot life at 50°C

### Example 8

A molded article was prepared in the same manner as described in Example 6 by using, as the monomer, a mixture comprising 50 parts of the waxy product obtained in Referential Example 2, 30 parts of DCP and 20 parts of methyltetracyclodecene and SIS in an amount of 5 parts per 100 parts as the elastomer.

The solidification point of the mixture was lower than 0°C, and Tg of the molded article was 129°C, the flexural modulus of elasticity was 27,000 kg/cm² and the impact strength was 35 kg cm/cm.

### Example 9

The oily product obtained in Referential Example 1 was charged in two vessels, and in one vessel, DEAC and n-butyl ether were added in amounts of 48 millimoles and 96 millimoles, respectively, per liter of the oily product and in the other vessel, a mixture of tungsten hexachloride/p-t-butyl phenol/benzonitrile ( = 1/1/1.4 by mole) was added in an amount such that the concentration of tungsten hexachloride was 7 millimoles per liter of the oily product. The above-mentioned SIS was added in an amount of 5 parts per 100 parts of the monomer equally in the two vessels. The so-prepared two reaction liquids were mixed at a mixing ratio of 1/1 by using an RIM machine of the impinging mixing type and the mixture was injection-molded under the same mold and temperature conditions as adopted in Example 6.

Tg of the so-obtained molded article was 111°C, the flexural modulus of elasticity was 20,000 kg/cm² and the impact strength was 30 kg cm/cm. The pot life of the mixture was about 15 seconds.

Example 10

A molded article was prepared in the same manner as described in Example 1 except that the oily product obtained in Referential Example 3 was used as the monomer and the above-mentioned SIS was used as the elastomer in an amount of 5 parts per 100 parts of the monomer. Tg of the obtained molded article was 105°C, the flexural modulus of elasticity was 20,500 kg/cm² and the impact strength was 40 kg cm/cm.

Example 11

Molded articles were prepared in the same manner as described in Example 6 except that each of the following elastomers was used in an amount of 5 parts per 100 parts of the monomer.
The physical properties of the molded articles are shown in Table 5.
The elastomers used are as follows.

EVA: Evatate R 5011 (supplied by Sumitomo Chemical)
SBS: Kraton TR-1101 (supplied by Shell Chemical)
SEBS: Kraton G-1650 (supplied by Shell Chemical) (hydrogenated SBS)
EPDM: EP-65X (supplied by Japanese Synthetic Rubber)
SBR: Nipol 1502 (supplied by Nippon Geon)

## Table 5

| | Examples of Present Invention | | | | |
|---|---|---|---|---|---|
| Kind of elastomer | EVA | SBS | SEBS | EPDM | SBR |
| Tg (°C) | 108 | 110 | 111 | 113 | 109 |
| Flexural modulus of elasticity (kg/cm²) | 20,300 | 21,000 | 21,500 | 22,000 | 21,000 |
| Izod impact strength (notched) (kg·cm/cm) | 35 | 37 | 38 | 40 | 30 |

According to the present invention, a thermosetting resin which is excellent over conventional DCP polymers in heat distortion temperature and flexural modulus of elasticity can be obtained economically advantageously by using a waxy or oily product derived from DCPD. When the polymerization is carried out in the presence of an elastomer, the resin exhibits an improved impact resistance. This resin can be used in various fields where a high heat resistance is required.

**Claims**

1. A process for the preparation of a thermosetting resin, characterized in that a waxy or oily product (A) obtained by heat-treating a dicyclopentadiene or a mixture of said product (A) and a norbornene monomer (B) is bulk-polymerized in a mold in the presence of a metathesis catalyst system.

2. A process according to claim 1, wherein said waxy or oily product (A) or a mixture of said waxy or oily product (A) with a norbornene monomer (B) is bulk-polymerized further in the presence of an elastomer.

13

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| D,A | US-A-4 400 340 (D.W. KLOSIEWICZ) <br> * Claims; column 7, lines 10-37 * <br> --- | 1 | C 08 G 61/08 |
| A | DE-A-2 237 353 (MONTECATINI EDSION) <br> * Claims * <br> ----- | 1 | |

TECHNICAL FIELDS
SEARCHED (Int. Cl.4)

C 08 G

The present search report has been drawn up for all claims

| Place of search | Date of completion of the search | Examiner |
|---|---|---|
| THE HAGUE | 03-08-1988 | DERAEDT G. |

EPO FORM 1503 03.82 (P0401)